# FASCICULE DE BREVET EUROPEEN

(11) **EP 2 146 661 B1**
(45) Date de publication et mention de la délivrance du brevet: **11.05.2011**
(21) Numéro de dépôt: 08761982.1
(22) Date de dépôt: 25.01.2008
(51) Int. Cl.: A61C 1/14

(54) **DISPOSITIF DE RÉTENTION AXIALE D'UNE QUEUE D'INSTRUMENT DENTAIRE COMPORTANT UN AXE TRAVERSÉ PAR AU MOINS UN GOUPILLE DE BLOCAGE**
VORRICHTUNG ZUR ACHSENBEIBEHALTUNG EINES ZAHNÄRZTLICHEN INSTRUMENTENARMS MIT EINER VON MINDESTENS EINEM SPERRBOLZEN GEKREUZTEN ACHSE
DEVICE FOR THE AXIAL RETENTION OF A DENTAL INSTRUMENT EXTREMITY HAVING AN AXIS CROSSED BY AT LEAST ONE LOCKING PIN

(30) Priorité: 17.04.2007 FR 0754517
(43) Date de publication de la demande: 27.01.2010
(73) Titulaire: Micro-Mega International Manufactures, 25000 Besancon (FR)
(72) Inventeur: PERNOT, Jacques, F-25870 Vieilley (FR); ZAZZI, Christelle, F-25360 Lanans (FR)
(74) Mandataire: Poupon, Michel
(86) Numéro de dépôt international: PCT/FR2008/050117
(87) Numéro de publication internationale: WO 2008/125758

(56) Documents cités:
- WO-A-99/13794
- WO-A-2006/097587
- DE-A1- 2 364 307
- DE-A1- 3 012 240
- US-A- 4 370 132
- US-A- 5 584 689

## Description

L'invention concerne un dispositif de rétention axiale d'une queue d'instrument dentaire ainsi que de transmission de l'entraînement en rotation dudit instrument.

Généralement, l'élément assurant ces deux fonctions est constitué d'une partie monobloc avec un fût solidaire de la tête d'une pièce à main, ou bien est constitué d'un système à clavette-disque transversale.

L'art antérieur connaît le document WO 99113794A qui concerne un dispositif de rétention axiale d'une queue d'instrument dentaire ainsi que de transmission de l'entraînement en rotation dudit instrument, dispositif disposé dans une tête de contre angle ou de pièce à main, ladite queue comportant à son extrémité une gorge annulaire dans laquelle au moins un ergot est apte à s'engager radialement ainsi qu'un méplat destiné à permettre l'entraînement en rotation de ladite queue, le mouvement en rotation étant communiqué à l'instrument par un pignon de sortie d'un ensemble mécanique de transmission couplé à un moteur d'entraînement et disposé dans un manche réuni à la tête du contre angle ou de la pièce à main, ledit dispositif étant formé de la combinaison d'un axe apte à être traversé axialement par la queue de l'instrument, d'au moins un levier élastique et disposé axialement dans un logement extérieur dudit axe, et portant chacun un ergot et d'au moins une goupille disposée chacune dans un trou transversal en partie haute de l'axe et décalé latéralement par rapport à la direction axiale de l'axe, de façon à permettre la coopération de la ou des goupilles avec le méplat prévu sur la queue de l'instrument.

Dans ce document, le levier élastique est obtenu par usinage du fût cylindrique de rétention, les deux moyens et les deux fonctions ne sont donc pas séparés ce qui complique la fabrication et ne permet pas l'interchangeabilité du bras ou la possibilité de le réaliser dans un matériau autre que celui du fût, par exemple un matériau moins dur ou plus élastique.

En outre, le moyen de solidarisation avec le méplat de la queue de l'instrument n'est pas démontable et son montage est complexe car il s'agit d'une pièce élastique bloquée par une pièce logée dans une rainure débouchante et qu'il faut bloquer par soudure ou collage.

La présente invention vise à améliorer les dispositifs existants en facilitant l'introduction de l'outil et l'engagement de son moyen de rétention axiale, en augmentant la transmission du couple de rotation, en facilitant le rodage de l'alésage destiné à recevoir la queue de l'instrument, en réalisant un système fiable et économique, et en proposant des moyens démontables et assurant un meilleur guidage de l'instrument.

Tous ces objectifs sont atteints par l'invention qui consiste en un dispositif de rétention axiale d'une queue d'instrument dentaire ainsi que de transmission de l'entraînement en rotation dudit instrument, dispositif disposé dans une tête de contre angle ou de pièce à main, ladite queue comportant à son extrémité une gorge annulaire dans laquelle au moins un ergot est apte à s'engager radialement ainsi qu'un méplat destiné à permettre l'entraînement en rotation de ladite queue, le mouvement en rotation étant communiqué à l'instrument par un pignon de sortie d'un ensemble mécanique de transmission couplé à un moteur d'entraînement et disposé dans un manche réuni à la tête du contre angle ou de la pièce à main, ledit dispositif étant formé de la combinaison d'un axe apte à être traversé axialement par la queue de l'instrument, d'au moins un levier élastique et disposé axialement dans un logement extérieur dudit axe, et portant chacun un ergot et d'au moins une goupille disposée chacune dans un trou transversal en partie haute de l'axe et décalé latéralement par rapport à la direction axiale de l'axe, de façon à permettre la coopération de la ou des goupilles avec le méplat prévu sur la queue de l'instrument, étant caractérisé en ce que le ou un levier élastique est indépendant de l'axe, ledit logement s'étend longitudinalement sur l'axe et comporte un fond s'étendant depuis un moyen de fixation du ou d'un levier en direction de la gorge annulaire, chaque goupille étant cylindrique et ayant une longueur inférieure ou au plus sensiblement égale au diamètre de la partie haute de l'axe et l'engagement du pignon sur la partie haute de l'axe bloquant la ou lesdites goupilles dans ledit axe.

Avantageusement, l'axe de forme générale cylindrique présente en partie centrale un diamètre plus important qu'aux deux extrémités de manière à créer au-dessus un épaulement servant de butée axiale basse au pignon engagé axialement sur la partie haute de l'axe et en-dessous un épaulement servant de butée axiale haute à un roulement à billes.

Avantageusement, le ou un levier est bloqué en partie basse entre un épaulement de l'axe et une bague intérieure du roulement à bille de la tête, la partie haute du levier possédant un degré de liberté dans une direction radiale par rapport à la queue de l'instrument et comportant un ergot apte à engager la gorge annulaire de la queue.

On comprendra mieux l'invention à l'aide de la description qui suit faite en références aux figures annexées suivantes :
- figure 1 : tête d'une pièce à main ou de contre angle vue en coupe longitudinale, équipée d'un dispositif selon l'invention maintenant la queue d'un instrument dentaire (non vue en coupe).
- figure 2 : vue générale d'une des pièces, appelée axe, composant le dispositif de rétention-entraînement selon l'invention.
- figure 3 : vue semi-éclatée de l'axe de la figure 2 montrant son positionnement dans une bague de roulement de la tête, et son positionnement par rapport à un pignon d'entraînement de rotation.
- figure 4 : vue d'ensemble des pièces de la figure 3 assemblées entre elles et visualisées sous un autre angle, la queue de l'instrument n'étant pas représentée.

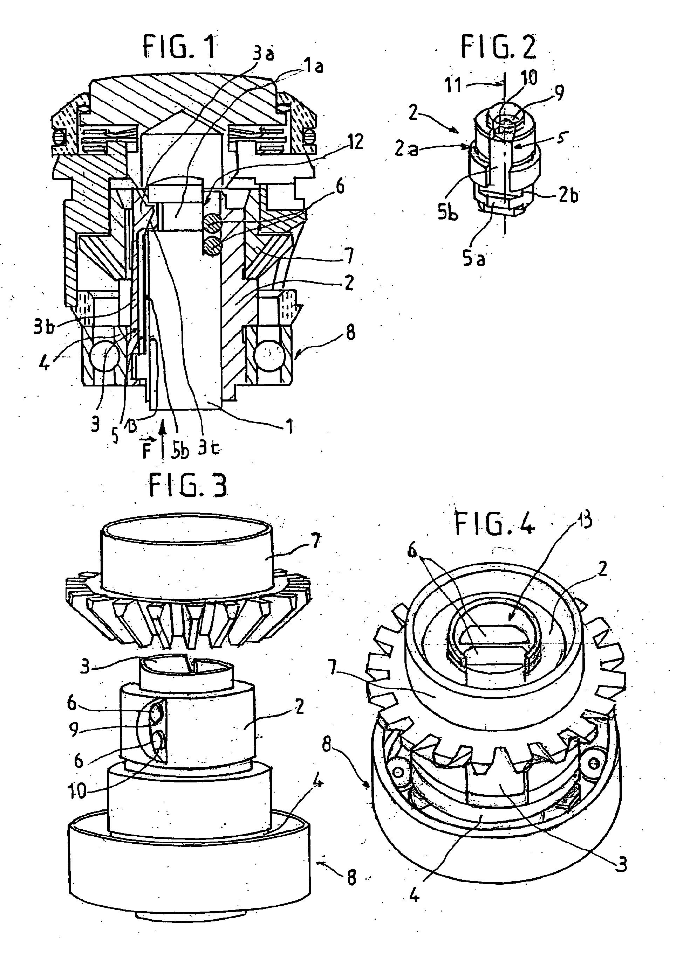

On se rapporte d'abord à la figure 1, qui montre la queue (1) d'un instrument dentaire insérée dans le dispositif de rétention-entraînement selon l'invention.

On remarque que la rétention axiale de la queue (1) est réalisée classiquement par l'engagement d'un ergot (3a) d'un levier élastique (3), dans une gorge annulaire (1a) prévue en extrémité de la queue (1) et que l'entraînement en rotation est prévu grâce à la présence d'un méplat (12) parallèle à l'axe de l'instrument. En variante de réalisation, il peut y avoir plusieurs leviers élastiques (3) terminés chacun par un ergot (3a). Les caractéristiques de la gorge annulaire et du méplat font d'ailleurs l'objet d'une norme.

Un levier élastique (3) est de forme allongée, logé parallèlement à l'axe de la queue (1) dans un logement latéral (5) d'une pièce interface appelée axe (2) et visible sur les figures (2, 3, 4).

Ledit levier (ou chaque levier) est bloqué en partie basse entre un épaulement (5a) de l'axe (2) et par exemple par une bague intérieure (4) d'un roulement à bille de la tête, permettant l'interchangeabilité du levier (3).

En variante de réalisation, on peut prévoir de solidariser le ou les leviers (3) sur l'axe (2) par soudure, brasure, ou autre moyen.

La partie haute d'un levier possède un degré de liberté dans une direction radiale par rapport à la queue de l'instrument. Classiquement, un ergot (3a) présente une pente (3c) facilitant l'introduction axiale de la queue (1) dans le sens de la flèche F et l'effacement dudit ergot par écartement de la partie haute du ou des leviers (3).

L'élasticité de la partie centrale (3b) d'un levier ramène l'ergot (3a) vers la queue et réalise son engagement dans la gorge annulaire (1a).

Préférentiellement, la partie centrale (3b) doit être la plus longue possible afin de mieux répartir la fatigue et garantir une bonne durée de vie, ceci dans un contexte de miniaturisation des têtes de contre-angles.

L'axe (2) de forme générale cylindrique (voir figure 2) présente en partie centrale un diamètre plus important qu'aux deux extrémités de manière à créer :
- au-dessus : un épaulement (2a) servant de butée axiale basse à un pignon (7) engagé axialement sur la partie haute de l'axe,
- en-dessous : un épaulement (2b) servant de butée axiale haute à un roulement à billes (8).

L'axe (2) est traversé axialement par un alésage (13) destiné au guidage de la queue (1) d'un instrument. Un logement latéral (5) d'un levier (3) a une profondeur inférieure à l'épaisseur de l'axe (2) de manière à ne pas déboucher dans l'alésage, sauf en regard de la gorge annulaire (1a) pour permettre l'engagement de ou des ergots (3a). Un (ou chaque) logement latéral (5) s'étant donc sur la périphérie de l'axe (2) depuis le moyen d'attache du levier, (ici l'épaulement (5a)) et en direction de la gorge annulaire (2), de préférence mais non obligatoirement jusqu'à elle. Sa partie en creux permet le déplacement du bras (3) et sa partie pleine, ou fond (5b) du logement, permet le guidage de la queue de l'instrument.

L'axe (2) comporte en outre deux trous transversaux (9 et 10) dans sa partie haute, décalés latéralement par rapport à la direction axiale (11) de l'axe (2), destinés à accueillir chacun une goupille (6) dont la longueur est inférieure ou au plus sensiblement égale au diamètre de la partie haute de l'axe (2). Le décalage radial est destiné à permettre l'engagement des goupilles contre le méplat (12) de la queue (1) et perpendiculairement à la direction axiale (11), la goupille la plus basse venant en butée dans le fond du méplat (12). La section des trous est de forme complémentaire à la section des goupilles et de dimension propre à permettre leur coulissement.

De cette manière, après engagement des goupilles (6), l'engagement du pignon (7) bloque lesdites goupilles dans l'axe (2) (voir figures 3 et 4). Bien entendu, il pourrait être envisagé un nombre de goupilles différent sans sortir du cadre de l'invention.

Les avantages de l'ensemble (axe 2 - goupilles 6 - levier 3) décrit ci-dessus présente les avantages recherchés à savoir :
- facilité d'introduction du méplat de la queue de l'outil grâce à la forme cylindrique des goupilles,
- couple transmis important,
- facilité de rodage de l'alésage contenant la queue de fraise,
- facilité de montage,
- système fiable et économique,
- bon guidage de la queue de l'instrument par l'axe (2) grâce au fait que cet axe ne comporte pas de fente axiale entre la gorge annulaire et le point d'attache du levier.

On note également que l'un (ou chaque) levier est une pièce fabriquée indépendamment de l'axe (2) et peut même être dans un matériau différent, il peut être ainsi interchangeable, et l'usinage est facilité. Dans l'invention, la partie centrale (3b) d'un bras n'entre pas en contact avec la queue de l'instrument, il y a séparation de la fonction de guidage de la queue qui est réalisée par l'axe (2) non fendu, et la fonction de rétention-libération réalisée par le ou les bras.

On note également que les goupilles sont logées dans des perçages de l'axe (2) et sont par conséquent immobilisées dans un sens et dans l'autre, selon une direction parallèle à la queue de l'instrument, par l'axe (2) lui même sans nécessiter aucune pièce de blocage, ni intervention de collage ou soudure d'une pièce de blocage comme c'est le cas dans le document de l'art antérieur dont il est fait référence en introduction. Les goupilles peuvent être retirées selon les axes des trous (9 et 10) après enlèvement du pignon (7). L'assemblage est donc totalement démontable.

Bien entendu, l'invention porte également sur des variantes d'exécutions.

## Revendications

1. Dispositif de rétention axiale d'une queue (1) d'instrument dentaire ainsi que de transmission de l'entraînement en rotation dudit instrument, dispositif disposé dans une tête de contre angle ou de pièce à main, ladite queue (1) comportant à son extrémité une gorge annulaire (1a) dans laquelle au moins un ergot (3a) est apte à s'engager radialement ainsi qu'un méplat (12) destiné à permettre l'entraînement en rotation de ladite queue (1), le mouvement en rotation étant communiqué à l'instrument par un pignon de sortie (7) d'un ensemble mécanique de transmission couplé à un moteur d'entraînement et disposé dans un manche réuni à la tête du contre angle ou de la pièce à main, ledit dispositif étant formé de la combinaison d'un axe (2) apte à être traversé axialement par la queue (1) de l'instrument, d'au moins un levier élastique (3) et disposé axialement dans un logement (5) extérieur dudit axe (2), et portant chacun un ergot (3a) et d'au moins une goupille (6) disposée chacune dans un trou transversal (9, 10) en partie haute de l'axe (2) et décalé latéralement par rapport à la direction axiale (11) de l'axe (2), de façon à permettre la coopération de la ou des goupilles avec le méplat prévu sur la queue (1) de l'instrument, étant **caractérisé en ce que** le ou un levier élastique (3) est indépendant de l'axe (2), ledit logement (5) s'étend longitudinalement sur l'axe (2) et comporte un fond (5b) s'étendant depuis un moyen de fixation du ou d'un levier en direction de la gorge annulaire (1a), chaque goupille (6) étant cylindrique et ayant une longueur inférieure ou au plus sensiblement égale au diamètre de la partie haute de l'axe (2), l'engagement du pignon (7) sur la partie haute de l'axe (2) bloquant la ou lesdites goupilles (6) dans ledit axe (2).

2. Dispositif selon la revendication 1, **caractérisé en ce que**, l'axe (2) de forme générale cylindrique présente en partie centrale un diamètre plus important qu'aux deux extrémités de manière à créer :
- au-dessus un épaulement (2a) servant de butée axiale basse au pignon (7) engagé axialement sur la partie haute de l'axe,
- en-dessous un épaulement (2b) servant de butée axiale haute à un roulement à billes (8).

3. Dispositif selon l'une des revendications 1 à 2, **caractérisé en ce que** le ou un levier (3) est bloqué en partie basse entre un épaulement (5a) de l'axe (2) et une bague intérieure (4) du roulement à billes (8) de la tête, la partie haute du levier (3) possédant un degré de liberté dans une direction radiale par rapport à la queue de l'instrument et comportant un ergot (3a) apte à engager la gorge annulaire (1a) de la queue (1).

## Claims

1. Device for the axial retention of an extremity (1) of a dental instrument and for the transmission of the rotational drive of said instrument, said device being arranged in a counter-angle head or a hand piece, said extremity (1) comprising at its end an annular groove (1 a) in which at least one lug (3a) is capable of engaging radially as well as a flat (12) for permitting the drive of said extremity (1) in rotation, the rotational movement being transmitted to the instrument by an output pinion (7) of a mechanical transmission assembly coupled to a drive motor and arranged in a handle joined to the counter-angle head or the hand piece, wherein said device is formed from the combination of an axle (2) that can be traversed axially by the extremity (1) of the instrument, at least one elastic lever (3) and arranged axially in an external housing (5) of said axle (2), and each bearing a lug (3a) and at least one pin (6) provided in a transverse hole (9, 10) in the upper portion of the axle (2) and offset laterally relative to the axial direction (11) of the axle (2); so as to allow the interaction of the pin(s) with the flat provided on the extremity (1) of the instrument, **characterised in that** the or an elastic lever (3) is independent of the axle (2), said housing (5) extending longitudinally to the axle (2) and comprising a base (5b) which extends from a securing means of the or a lever in the direction of the annular groove (1 a), each pin (6) being cylindrical and having a length smaller than or at least substantially equal to the diameter of the upper part of the axle (2), the engagement of the pinion (7) on the upper part of the axle (2) blocking the or said pin(s) (6) in said axle (2).

2. Device according to claim 1, **characterised in that** the axle (2) with a generally cylindrical shape has in its central section a diameter which is greater than at the two ends so as to create:
- at the top a shoulder (2a) acting as a lower axial stop of the pinion (7) engaged axially on the upper part of the axle,
- at the bottom a shoulder (2b) acting as an upper axial stop to a ball bearing (8).

3. Device according to any one of claims 1 to 2, **characterised in that** the or a lever (3) is blocked partly low down between a shoulder (5a) of the axle (2) and an internal ring (4) of the ball bearing (8) of the head, the upper part of the lever (3) having a degree of freedom in a radial direction in relation to the extremity of the instrument and comprising a pin (3a) capable of engaging with the annular groove (1a) of the extremity (1).

## Patentansprüche

1. Vorrichtung zum axialen Halten eines Endstückes (1) eines zahnärztlichen Instrumentes und zum Versetzen des Instrumentes in Drehung, wobei die Vorrichtung zwischen einem Winkelkopf oder einem Handstück angeordnet ist, wobei das Endstück (1) an seinem Ende eine ringartige Nut (1a) aufweist, die zum radialen Eingriff mit wenigstens einer Nocke (3a) eingerichtet ist, und über eine Abflachung (12) verfügt, die dazu bestimmt ist, das Endstück (1) in Drehung zu versetzen, wobei die Drehbewegung über ein ausgangsseitiges Zahnrad (7) einer mechanischen Antriebseinheit vermittelt ist, die an einen Antriebsmotor gekoppelt und in einem Schaft angeordnet ist, der an dem Kopf des Winkelstückes oder des Handstückes angeordnet ist, wobei die Vorrichtung aus der Kombination mit einer Achse (2), die dazu eingerichtet ist, durch das Endstück (1) des Instrumentes axial gequert zu werden, mit wenigstens einem Hebel (3), der elastisch sowie axial in einer außerhalb der Achse (2) liegenden Aufnahme (5) angeordnet ist und wenigstens jeweils eine Nocke (3) trägt, und mit wenigstens einem Stift (6) gebildet ist, der jeweils in einem Querloch (9, 10) im oberen Bereich der Achse (2) und seitlich versetzt in Bezug auf die Achsenrichtung (11) der Achse (2) angeordnet ist, um das Zusammenwirken des oder jedes Stiftes mit der an dem Endstück (1) eines Instrumentes ausgebildeten Abflachung zu gestatten, **dadurch gekennzeichnet, dass** der oder ein elastischer Hebel (3) von der Achse (2) unabhängig ist, wobei sich die Aufnahme (5) in Längsrichtung an der Achse (2) erstreckt und einen Boden (5b) aufweist, der sich von einem Befestigungsmittel des oder eines Hebels in Richtung der ringartigen Nut (1a) erstreckt, wobei jeder Stift (6) zylindrisch ist und eine Länge aufweist, die kleiner oder höchstens gleich dem Durchmesser des oberen Bereiches der Achse (2) ist, wobei der Eingriff des Zahnrades (7) mit dem oberen Bereich der Achse (2) den oder jeden Stift (6) mit der Achse (2) verriegelt.

2. Vorrichtung nach Anspruch 1, **dadurch gekennzeichnet, dass** die Achse (2), die von im wesentlichen zylindrischer Gestalt ist, einen Mittenbereich mit einem größeren Durchmesser als an den Enden aufweist, um
- oberhalb eine Schulter (2a) auszubilden, die als unterer axialer Anschlag des Zahnrades (7) dient, das axial mit dem oberen Bereich der Achse in Eingriff ist, und
- unterhalb eine Schulter (2b) auszubilden, die als oberer axialer Anschlag eines Kugellagers (8) dient.

3. Vorrichtung nach einem der Ansprüche 1 bis 2, **dadurch gekennzeichnet, dass** der oder ein Hebel (3) in seinem unteren Bereich zwischen einer Schulter (5a) der Achse (2) und einem Innenring (4) des Kugellagers (8) des Kopfes festgelegt ist, wobei der obere Bereich des Hebels (3) in einer radialen Richtung in Bezug auf das Endstück des Instrumentes einen Freiheitsgrad besitzt und über eine Nocke (3a) verfügt, die dazu eingerichtet ist, mit der ringartigen Nut (1a) des Endstückes (1) in Eingriff zu kommen.
